# EUROPÄISCHE PATENTANMELDUNG

(11) **EP 2 086 091 A2**
(43) Veröffentlichungstag der Anmeldung: **05.08.2009**
(21) Anmeldenummer: 09450028.7
(22) Anmeldetag: 30.01.2009
(51) Int. Cl.: H02K 9/06

(54) **Luftgekühlte elektrische Maschine**

(30) Priorität: 04.02.2008 AT 1712008
(71) Anmelder: Traktionssysteme Austria GmbH, 2351 Wiener Neudorf (AT)
(72) Erfinder: Neudorfer, Harald, 2514 Traiskirchen (AT)
(74) Vertreter: Sonn & Partner Patentanwälte

(57) **Zusammenfassung**

Die Erfindung betrifft eine luftgekühlte elektrische Maschine (1) mit einem mit einer Welle (2) drehfest verbundenen Rotor (3), einem Stator (4), an der Antriebsseite und Nichtantriebsseite der Maschine (1) angeordnete Lagerschilde (9, 8) enthaltend die Lager (7, 6) zur drehbaren Aufnahme der Welle (2), wobei an einem Ende der Welle (2) ein Lüfter (10) zur Führung von Kühlluft durch axial angeordnete Kanäle (5) im Stator (4) und allenfalls Rotor (3) drehfest mit der Welle (2) verbunden ist. Zur Verbesserung der Kühlung auch an der Abluftseite, d.h. an der dem Lüfter (10) gegenüberliegenden Seite, sind im Lagerschild (8) neben dem Lüfter (10) Öffnungen (11) zur Führung eines Teils der Kühlluft in axialer Richtung an der Außenseite des Stators (4) zum gegenüberliegenden Lagerschild (9) angeordnet. Am gegenüberliegenden Lagerschild (9) sind vorzugsweise Elemente (14) zum Leiten der Kühlluft in radialer Richtung vorgesehen.

## Beschreibung

Die Erfindung betrifft eine luftgekühlte elektrische Maschine mit einem mit einer Welle drehfest verbundenen Motor, einem Stator, an der Antriebsseite und Nichtantriebsseite der Maschine angeordnete Lagerschilde enthaltend die Lager zur drehbaren Aufnahme der Welle, wobei an einem Ende der Welle ein Lüfter zur Führung von Kühlluft durch axial angeordnete Kanäle im Stator und allenfalls Rotor drehfest mit der Welle verbunden ist.

Die DE 102 47 310 A1 beschreibt beispielsweise eine elektrische Maschine mit Luftkühlung, bei der die Kühlluft einerseits an der Außenwand des Gehäuses der Maschine und andererseits auch im Inneren der Maschine geführt wird.

Die EP 1 246 344 A2 zeigt eine elektrische Maschine, bei der die Gehäuseform an die Form des Ständerwickelkopfes angepasst ist, wodurch eine Verbesserung der Kühlluftführung im Bereich des Ständerwickelkopfes erzielbar ist.

Schließlich zeigt die US 6,891,290 B2 eine gekapselte elektrische Maschine mit Lüftern, welche drehfest mit der Welle verbunden sind und die Kühlluft durch verschiedene Kanäle der elektrischen Maschine fördert.

Nachteilig bei derartigen Luftgekühlten elektrischen Maschinen ist, dass der Bereich um den Lüfter, insbesondere das neben dem Lüfter angeordnete Lager bzw. der entsprechende Lagerschild besser gekühlt wird als der gegenüberliegende Lagerschild und das gegenüberliegende Lager. In der Folge resultieren Temperaturunterschiede zwischen der einen und anderen Seite der elektrischen Maschine, welche bis zu 30-40 K betragen können. Die während des Betriebs der elektrischen Maschine auftretenden maximalen Temperaturen sind ausschlaggebend für die Dimensionierung der Maschine und sollten daher möglichst tief liegen.

Ziel der vorliegenden Erfindung ist es die Kühlung der elektrischen Maschine zu verbessern, so dass die maximal auftretenden Temperaturen auch an der gegenüberliegenden Seite des Lüfters und somit die Temperaturunterschiede im Rotor reduziert werden können. Insbesondere sollen die Lagerbereiche der elektrischen Maschine auf beiden Seiten ausreichend gekühlt werden.

Die Erfindung soll möglichst einfach und kostengünstig realisierbar sein und auch eine einfache Nachrüstung bestehender Maschinen zulassen.

Gelöst wird die erfindungsgemäße Aufgabe dadurch, dass im Lagerschild neben dem Lüfter Öffnungen zur Führung eines Teils der Kühlluft in axialer Richtung an der Außenseite des Stators zum gegenüberliegenden Lagerschild angeordnet sind. Durch die Öffnungen im Lagerschild wird ein Teil der Kühlluft nicht durch die üblicherweise angeordneten Bohrungen im Stator geführt, sondern außen entlang der Maschine und dort in den Bereich des gegenüberliegenden Lagerschilds, wo eine bessere Kühlung auch dieses Lagerschilds resultiert. Die Erfindung zeichnet sich durch besondere Einfachheit und kostengünstige Herstellbarkeit aus.

Gemäß einem weiteren Merkmal der Erfindung ist vorgesehen, dass neben dem gegenüberliegenden Lagerschild zumindest ein Element zum Leiten der in axialer Richtung geführten Kühlluft in radialer Richtung über dem gegenüberliegenden Lagerschild vorgesehen ist. Durch derartige besonders einfach ausgeführte Leitelemente kann die Kühlluft, welche in axialer Richtung durch die Kühlkanäle im Stator bzw. an der Außenseite des Stators geführt wird, gezielt über die zu kühlenden Bereiche, insbesondere den Lagerschild, geführt werden. Durch die Anordnung derartiger Leitelemente können elektrische Maschinen auch besonders einfach nachgerüstet werden und mit geringem Aufwand eine Verbesserung der Kühlung erzielt werden.

Das zumindest eine Leitelement ist vorzugsweise durch zumindest ein in einem Abstand an der Außenseite des gegenüberliegenden Lagerschilds angeordnetes Blech gebildet. Dabei kann das Leitelement durch eine Art Lüfterhaube ausgebildet sein, welche in einem Abstand zum Lagerschild an der elektrischen Maschine befestigt wird.

Alternativ dazu können auch mehrere in gleichmäßigen Winkelabständen angeordnete Bleche vorgesehen sein.

Es ist natürlich auch möglich, das zumindest eine Leitelement einstückig mit dem Lagerschild vorzugsweise gusstechnisch herzustellen.

Eine weitere Verbesserung der Kühlwirkung kann dadurch erzielt werden, dass am gegenüberliegenden Lagerschild zumindest im Bereich des zumindest einen Leitelements an der dem zumindest einen Leitelement zugewandten Seite Kühlrippen angeordnet sind. Durch derartige Kühlrippen, welche gusstechnisch relativ einfach herstellbar sind, wird die Oberfläche vergrößert und die Wärmeabfuhr verbessert.

Zusätzlich zu den Öffnungen im Lagerschild neben dem zumindest einen Lüfter können auch Elemente zur Leitung der Kühlluft in axialer Richtung an der Außenseite des Stators vorgesehen sein. Durch diese Leitelemente wird der Kühlluftstrom in seine gewünschte Richtung gezwungen.

Beispielsweise können die Leitelemente durch Bleche gebildet sein, welche mit entsprechenden Schrauben am Lagerschild befestigt werden. Durch eine derartige Ausführungsform kann eine bestehende elektrische Maschine einfach nachgerüstet und dadurch die Kühlung verbessert werden.

Alternativ dazu können die Leitelemente natürlich auch einstückig mit dem Lagerschild vorzugsweise im Gussverfahren hergestellt sein.

Zur Verbesserung der Kühlung der elektrischen Maschine im Außenbereich kann der Stator auch im Bereich der an der Außenseite axial geführten Kühlluft Kühlrippen oder dgl. aufweisen.

Vorteilhafterweise ist der zumindest eine Lüfter an der Nichtantriebsseite der elektrischen Maschine angeordnet. Durch die erfindungsgemäßen Merkmale wird auch der Lagerschild an der Antriebsseite ausreichend gekühlt und somit die Temperaturdifferenz zwischen Nichtantriebsseite und Antriebsseite der Maschine reduziert.

Zusätzlich kann natürlich auch am anderen Ende der Welle ein Lüfter drehfest mit der Welle verbunden sein und die Förderung der Kühlluft verbessern.

Die vorliegende Erfindung wird anhand der beigefügten Zeichnungen, welche ein Ausführungsbeispiel der Erfindung zeigen, näher erläutert.

Darin zeigen:
Fig. 1 ein Schnittbild durch eine elektrische Maschine der gegenständlichen Art;
Fig. 2 ein Schnittbild durch die Maschine gemäß Fig. 1 entlang der Schnittlinie II-II;
Fig. 3 ein Detail der erfindungsgemäßen elektrischen Maschine im Bereich des nichtantriebsseitigen Lagerschilds in vergrößerter Darstellung;
Fig. 4 das Detail der elektrischen Maschine im Bereich des antriebsseitigen Lagerschilds;
Fig. 5 die Seitenansicht auf die elektrische Maschine im Bereich des antriebsseitigen Lagerschilds gemäß Fig. 3; und
Fig. 6 ein Schnittbild durch den nichtantriebsseitigen Lagerschild gemäß Fig. 3 entlang der Schnittlinie VI-VI.

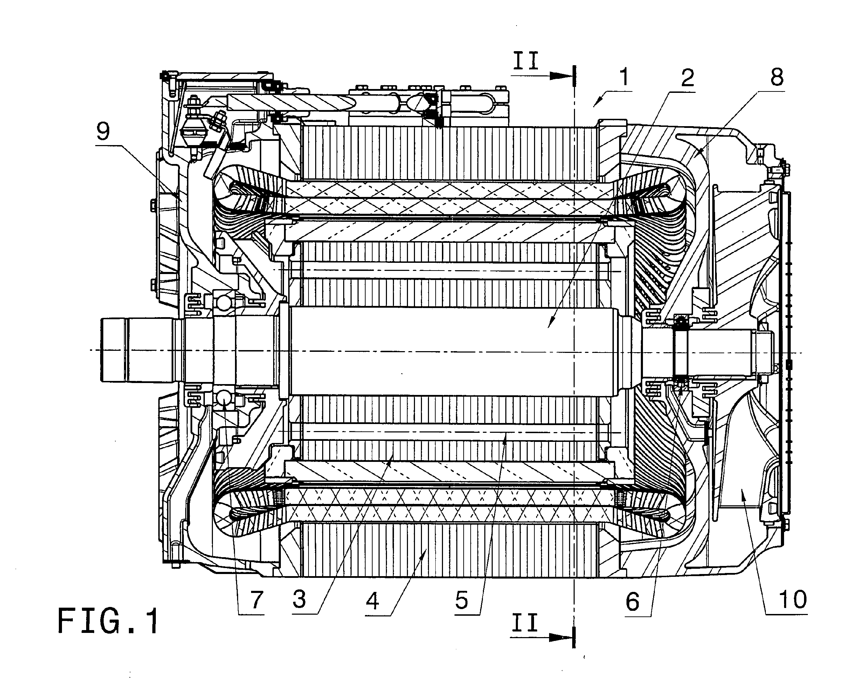

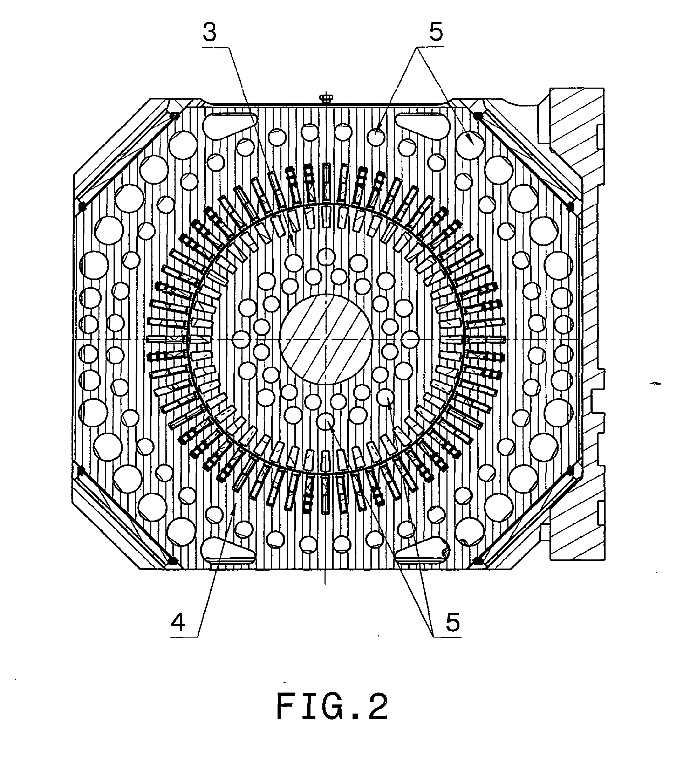

Fig. 1 zeigt ein Schnittbild einer luftgekühlten elektrischen Maschine 1 mit einem mit einer Welle 2 drehfest verbundenen Rotor 3 und einem in einem Abstand zum Rotor 3 angeordneten Stator 4. Der Rotor 3 und der Stator 4 sind üblicherweise aus Blechpaketen aufgebaut. Wie dem Schnittbild gemäß Fig. 2 besser entnommen werden kann, sind üblicherweise sowohl im Stator 4 als auch im Rotor 3 Kühlkanäle 5 zur Führung von Kühlluft angeordnet.

Die Welle 2 der elektrischen Maschine 1 ist an beiden Seiten, der Nichtantriebsseite und der mit einem Getriebe (nicht dargestellt) zu verbindenden Antriebsseite, über entsprechende Lager 6, 7 drehbar gelagert. Um die Lager 6, 7 sind sogenannte Lagerschilde 8, 9 angeordnet. Im dargestellten Beispiel ist an der Nichtantriebsseite ein Lüfter 10 drehfest mit der Welle 2 verbunden. Über diesen Lüfter 10 wird Luft an der Nichtantriebsseite angesaugt und damit das Lager 6 und der Lagerschild 8 an der Nichtantriebsseite gekühlt. Danach wird die Kühlluft über die Kühlkanäle 5 im Stator 4 und allenfalls im Rotor 3 geführt und auf die gegenüberliegende Seite, im Beispiel an die Antriebsseite der elektrischen Maschine 1, geführt. Dort wird das antriebsseitige Lager 7 und der antriebsseitige Lagerschild 9 unzureichend gekühlt, wodurch Temperaturunterschiede zwischen Nichtantriebsseite und Antriebsseite bis zu 30-40 K resultieren können.

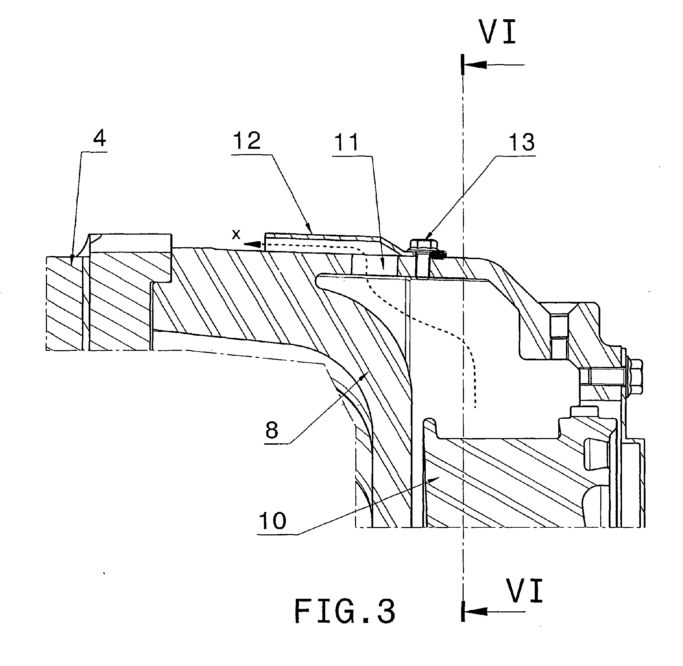

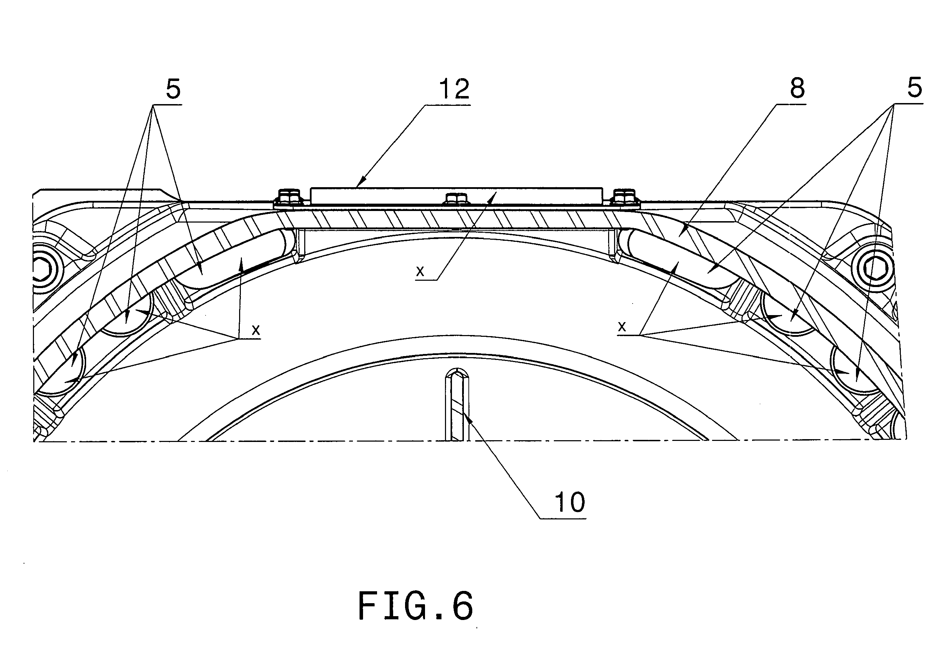

Fig. 3 zeigt nunmehr ein Merkmal der vorliegenden Erfindung im Bereich des dem Lüfter 10 benachbarten Lagerschilds 8, im dargestellten Beispiel dem nichtantriebsseitigen Lagerschild 8. Erfindungsgemäß ist im nichtantriebsseitigen Lagerschild 8 eine Öffnung 11 vorgesehen, durch welche ein Teil der Kühlluft (Pfeil X) abgezweigt und in axialer Richtung an der Außenseite des Stators 4 zum gegenüberliegenden Lagerschild 9 transportiert wird. Im dargestellten Beispiel ist über der Öffnung 11 ein Element 12 zur Leitung der Kühlluft in axialer Richtung vorgesehen. Dieses Leitelement 12 kann durch ein entsprechend geformtes Blech einfach hergestellt werden und mit Hilfe von Schrauben 13 oder dgl. mit dem Lagerschild 8 verbunden werden. Alternativ dazu ist natürlich auch eine einstückige Herstellung des Leitelements 12 mit dem Lagerschild 8, vorzugsweise in einem Gussverfahren, möglich. Anhand des Schnittbildes gemäß Fig. 6 ist ersichtlich, dass die Kühlluft sowohl durch die Kühlkanäle 5 als auch an der Außenseite des Stators 4 geführt wird, wie anhand der Pfeile X gekennzeichnet.

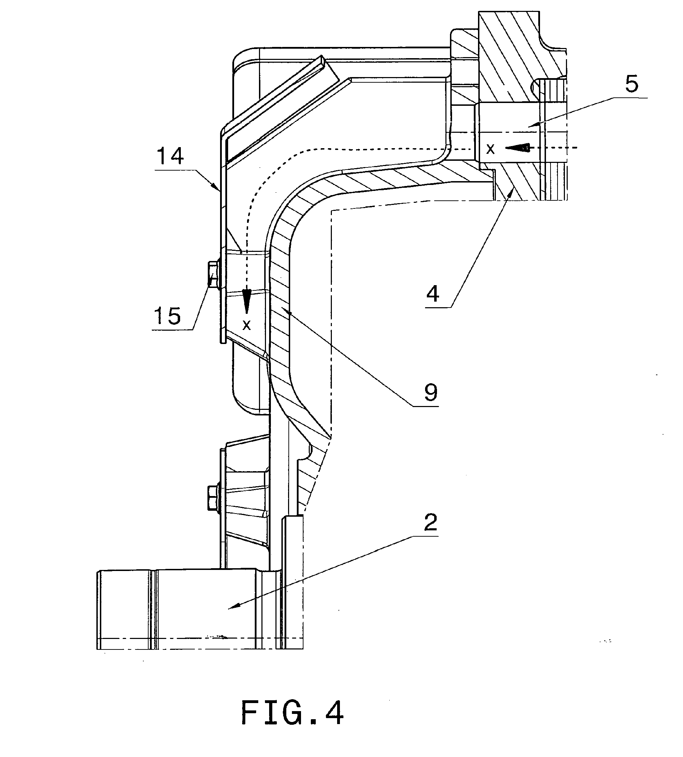

Anhand der Darstellung gemäß Fig. 4 wird nunmehr die Situation am gegenüberliegenden Lagerschild 9, im dargestellten Beispiel am antriebsseitigen Lagerschild 9, gezeigt. Die durch die Kühlkanäle 5 im Stators 4 bzw. an der Außenseite des Stators 4 geführte Kühlluft (Pfeil X) wird mit Hilfe eines Leitelements 14 an der Antriebsseite in radiale Richtung über den Lagerschild 9 gezwungen. Das Leitelement 14 kann wiederum durch ein Blech gebildet sein, welches mit Hilfe entsprechender Befestigungselemente 15, wie zum Beispiel Schrauben, am Lagerschild 9 befestigt wird.

Alternativ dazu kann das Leitelement 14 auch einstückig mit dem Lagerschild 9 in einem Gussverfahren hergestellt werden.

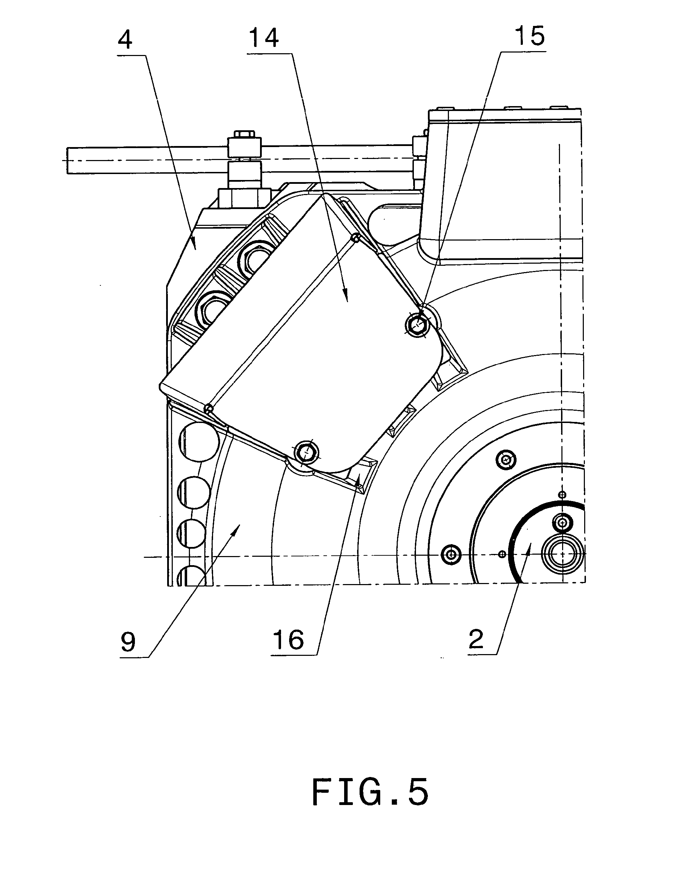

Fig. 5 zeigt die Seitenansicht auf den antriebsseitigen Lagerschild 9 mit dem erfindungsgemäßen Leitelement 14. Durch diese Methode kann eine Verbesserung der Kühlung des Lagers 7 und des Lagerschildes 9 an der gegenüberliegenden Seite des Lüfters 10 erzielt werden. Durch die relativ einfachen Maßnahmen kann beispielsweise eine Verringerung der Differenz der Temperatur zwischen Nichtantriebsseite und Antriebsseite um etwa 15 K erzielt werden.

Zur weiteren Verbesserung der Kühlung können am antriebsseitigen Lagerschild 9 im Bereich des Leitelements 14 Kühlrippen 16 angeordnet sein. Durch diese Kühlrippen 16, welche relativ einfach mit dem Lagerschild 9 herstellbar sind, wird die Oberfläche im Bereich der Leitelemente 14 vergrößert und somit die Kühlwirkung verbessert.

Im dargestellten Beispiel befinden sich vier Leitelemente 14 in gleichmäßigen Winkelabständen von im Wesentlichen 90° an der Antriebsseite der elektrischen Maschine 1. Alternativ dazu kann auch ein ringförmiges Leitelement am antriebsseitigen Lagerschild 9 angeordnet werden (nicht dargestellt).

Zusätzlich können auch am Stator 4 im Bereich der an der Außenseite axial geführten Kühlluft Kühlrippen (nicht dargestellt) angeordnet sein.

Weiters kann auch an der Antriebsseite der elektrischen Maschine 1 ein weiterer Lüfter zur Förderung der Kühlluft vorgesehen sein (nicht dargestellt).

Mit den erfindungsgemäßen Maßnahmen können auch in besonders einfacher und kostengünstiger Weise bestehende elektrische Maschinen nachgerüstet werden und eine Verbesserung der Kühlung, insbesondere eine Verbesserung der Kühlung des Lagerbereichs an der Abluftseite, d.h. an der gegenüberliegenden Seite des Lüfters erreicht werden. Durch die Senkung der Grenztemperatur können die elektrischen Maschinen entsprechend kleiner dimensioniert bzw. für höhere Laufzeiten ausgelegt werden.

## Patentansprüche

1. Luftgekühlte elektrische Maschine (1) mit einem mit einer Welle (2) drehfest verbundenen Rotor (3), einem Stator (4), an der Antriebsseite und Nichtantriebsseite der Maschine angeordneten Lagerschilde (9, 8) enthaltend die Lager (7, 6) zur drehbaren Aufnahme der Welle (2), wobei an einem Ende der Welle (2) ein Lüfter (10) zur Führung von Kühlluft durch axial angeordnete Kanäle (5) im Stator (4) und allenfalls Rotor (3) drehfest mit der Welle (2) verbunden ist, **dadurch gekennzeichnet, dass** im Lagerschild (8) neben dem Lüfter (10) Öffnungen (11) zur Führung eines Teils der Kühlluft in axialer Richtung an der Außenseite des Stators (4) zum gegenüberliegenden Lagerschild (9) angeordnet sind.

2. Elektrische Maschine (1) nach Anspruch 1, **dadurch gekennzeichnet, dass** neben dem gegenüberliegenden Lagerschild (9) zumindest ein Element (14) zum Leiten der in axialer Richtung geführten Kühlluft in radialer Richtung über den gegenüberliegenden Lagerschild (9) vorgesehen ist.

3. Elektrische Maschine (1) nach Anspruch 2, **dadurch gekennzeichnet, dass** das zumindest eine Leitelement (14) durch zumindest ein in einem Abstand an der Außenseite des gegenüberliegenden Lagerschilds (9) angeordnetes Blech gebildet ist.

4. Elektrische Maschine (1) nach Anspruch 3, **dadurch gekennzeichnet, dass** mehrere in gleichmäßigen Winkelabständen angeordnete Bleche zur Bildung der Leitelemente (14) vorgesehen sind.

5. Elektrische Maschine (1) nach Anspruch 2, **dadurch gekennzeichnet, dass** das zumindest eine Leitelement (14) einstückig mit dem gegenüberliegenden Lagerschild (9) hergestellt ist.

6. Elektrische Maschine (1) nach einem der Ansprüche 1 bis 5, **dadurch gekennzeichnet, dass** am gegenüberliegenden Lagerschild (9) zumindest im Bereich des zumindest einen Leitelements (14) an der dem zumindest einen Leitelement (14) zugewandten Seite Kühlrippen (16) angeordnet sind.

7. Elektrische Maschine (1) nach einem der Ansprüche 1 bis 6, **dadurch gekennzeichnet, dass** neben den Öffnungen (11) im Lagerschild (8) Elemente (12) zur Leitung der Kühlluft in axialer Richtung an der Außenseite des Stators (4) vorgesehen sind.

8. Elektrische Maschine (1) nach Anspruch 7, **dadurch gekennzeichnet, dass** die Leitelemente (12) durch Bleche gebildet sind, welche mit Schrauben (13) am Lagerschild (8) befestigt sind.

9. Elektrische Maschine (1) nach Anspruch 7, **dadurch gekennzeichnet, dass** die Leitelemente (12) einstückig mit dem Lagerschild (8) hergestellt sind.

10. Elektrische Maschine (1) nach einem der Ansprüche 1 bis 9, **dadurch gekennzeichnet, dass** der Stator (4) im Bereich der an der Außenseite axial geführten Kühlluft Kühlrippen aufweist.

11. Elektrische Maschine (1) nach einem der Ansprüche 1 bis 10, **dadurch gekennzeichnet, dass** der Lüfter (10) an der Nichtantriebsseite angeordnet ist.

12. Elektrische Maschine (1) nach einem der Ansprüche 1 bis 11, **dadurch gekennzeichnet, dass** auch am anderen Ende der Welle (2) ein Lüfter drehfest mit der Welle (2) verbunden ist.
